**Europäisches Patentamt**

**European Patent Office**

**Office européen des brevets**

(19)

(11) Veröffentlichungsnummer: **0 140 102**
**B1**

(12)

# EUROPÄISCHE PATENTSCHRIFT

(45) Veröffentlichungstag der Patentschrift:
03.09.86

(51) Int. Cl.⁴: **C 07 C 49/92, C 08 F 4/76**

(21) Anmeldenummer: 84110932.5

(22) Anmeldetag: 13.09.84

(54) **Wasserlösliche Titanacetylacetonate.**

(30) Priorität: 12.10.83 DE 3337100

(43) Veröffentlichungstag der Anmeldung:
08.05.85 Patentblatt 85/19

(45) Bekanntmachung des Hinweises auf die Patenterteilung:
03.09.86 Patentblatt 86/36

(84) Benannte Vertragsstaaten:
**BE DE FR GB NL**

(56) Entgegenhaltungen:
**DE-A-2 200 347**
**DE-A-3 008 193**
**US-A-4 294 724**

**HANS KITTEL, "Lehrbuch der Lacke und
Beschichtungen" Band III: "Lösemittel,
Weichmacher, Additive, Zwischenprodukte", 1976
VERLAG W.A. COLOMB in der H. HEENEMANN
GMBH Berlin-Oberschwandorf**

(73) Patentinhaber: **DYNAMIT NOBEL
AKTIENGESELLSCHAFT, Postfach 1261, D-5210
Troisdorf, Bez. Köln (DE)**

(72) Erfinder: **Barfurth, Dieter, Adenauerstrasse 34,
D-5210 Troisdorf- Spich (DE)**
Erfinder: **Nestler, Heinz, Dr., Rembrandtstrasse 73,
D-5210 Troisdorf- Eschmar (DE)**

EP 0 140 102 B1

**Beschreibung**

Gegenstand der vorliegenden Erfindung sind Titan(IV)dialkoxybis-acetylacetonate, die entweder selbst in Wasser löslich sind oder deren Lösungen mit Wasser mischbar sind, ohne daß Zersetzungen auftreten.

Es ist bekannt, Titanchelate, insbesondere Titan(IV)bisacetylacetonat, als Katalysator, Vernetzer oder als Beschichtungsmaterial einzusetzen. Dabei kann, im Gegensatz zum Einsatz von Alkyltitanaten, auch in Gegenwart von Feuchtigkeit gearbeitet werden, da die in Praxis eingesetzten alkoholischen Lösungen von Titan (IV)-dialkoxybis-acetylacetonaten wasserverträglich sind. Diese Lösungen werden im allgemeinen hergestellt durch Umsetzung von einem Mol eines Titansäuretetraalkylesters, insbesondere von Tetraisopropyltitanat, mit zwei Mol Acetylaceton, wobei der bei der Reaktion freiwerdende Alkohol nicht abdestilliert wird, sondern als Lösungsmittel für das auch als Titanacetylacetonat bezeichnete Reagenz dient. Demzufolge sind die handelsüblichen Lösungen von Titanacetylacetonat im allgemeinen etwa 75 %ige Lösungen dieses Chelats in dem der Alkoxigruppe entsprechenden Alkohol.

In den Einsatzgebieten für Titanacetylacetonate besteht zunehmend die Forderung, dieses Reagenz in geringen Konzentrationen, vornehmlich in Konzentrationen unter 5 %, einzusetzen und das organische Lösungsmittel weitgehend durch Wasserzu ersetzen.

Die an sich naheliegende Lösung dieser Forderung die oben genannten alkoholischen Lösungen des Titsnacetylacetonats mit Wasser zu verdünnen, stößt auf folgende Schwierigkeiten:

Beim einfachen Verdünnen dieser alkoholischen Lösungen mit Wasser fallen Niederschläge aus. Zur Verhinderung des Auftretens dieser Niederschläge ist es bereits vorgeschlagen worden, vor dem Wasserzusatz die Lösung mit der gleichen Gewichtsmenge 10 %iger Essigsäure zu versetzen, anschließend die 13 fache Menge einer 1:1-Isopropanol-Wasser-Mischung hinzuzufügen und daraufhin erst mit Wasser zu verdünnen. Weitere Vorschläge geben an, entweder zunächst die doppelte Menge Methylethylketon hinzuzufügen und dann das Wasser langsam einzurühren oder das Wasser in Form einer Mischung aus 7 Teilen Wasser und 3 Teilen Isopropanol einzubringen. Alle diese Vorschläge sind teilweise zu aufwendig, erhöhen den Anteil an organischen Lösungsmitteln und bringen keine befriedigende Lösung des Problems.

Es bestand deshalb die Aufgabe, Titanacetylacetonatlösungen bereitzustellen, die sich durch einfache Zugabe von Wasser auf Gehalte unter 5 % verdünnen lassen, ohne daß Trübungen der Lösungen eintreten.

In Erfüllung dieser Aufgabe wurden nun Titan (IV)-dialkoxy-bis-acetylacetonate gefunden, die dadurch gekennzeichnet sind, daß mindestens eine der Alkoxygruppen eine Alkyloxiallylenoxi- oder eine Alkyloxipolyalkylenoxigruppe ist.

Die neuen Verbindungen sind wasserlöslich. Ihre Lösungen in Glycolethern oder Polyglycolethern sind ebenfalls mit Wasser verdünnbar und eignen sich besonders gut zur Herstellung von niedrigprozentigen Acetylacetonatlösungen mit Gehalten an den neuen Titanacetylacetonaten unter 5 Gew.-% Der Einsatz solcher (Poly)-glycolether-Lösungen als Ausgangslösungen zur Herstellung von verdünnten wäßrigen Titan(IV)-acetylacetonat-Lösungen empfiehlt sich besonders deshalb, weil diese Lösungen bei der Herstellung der neuen Verbindungen direkt anfallen.

Die Herstellung erfolgt im allgemeinen aus den bekannten Titan(IV)-dialkoxy-bis-acetylacetonaten bzw. deren alkoholischen Lösungen. Diese werden mit soviel Glycolether oder Polyglycolether versetzt, wie zur Einstellung der gewünschten Konzentration an Titanchelat und zum Austausch von ein oder zwei Alkoxygruppen pro Mol Titanchelat notwendig ist. Anschließend wird auf mindestens 40°C erwärmt und der abgespaltene Alkohol sowie der Lösungs-Alkohol abdestilliert. Die Abdestillation erfolgt zweckmäßigerweise unter Vakuum. Aufgrund der in der Regel großen Siedepunktsunterschiede zwischen dem Alkohol und den Glycolethern bereitet diese Arbeitsweise und das Abtrennen des Alkohols keine Probleme.

Beim Austausch nur einer Alkoxygruppe in den alkoholischen Titan(IV)-dialkoxy-bis-acetylacetonat-Lösungen müssen demzufolge drei Mol Alkohol pro Mol Titanchelatlösung, beim Austausch beider Alkoxygruppen vier Mol Alkohol aus dem Ansatz entfernt werden. Wenn die Herstellung der neuen Verbindungen in lösemittelfreier Form gewünscht wird, dann wird bei der genannten Herstellungsart nur soviel (Poly)-Glycolether eingesetzt, wie dem auszutauschenden, gebundenen Alkohol entspricht. Die Abdestillation des Alkohols wird dann solange fortgesetzt, bis sowohl der ursprünglich gebundene als auch der als Lösungsmittel eingesetzte einfache Alkohol abdestilliert ist.

Für technische, praktische Zwecke genügt jedoch die Herstellung von wasserverträglichen Lösungen der neuen Titanchelate. Dazu wird praktischerweise zusätzlich zu der Menge des (Poly)-Glycolethers, der für den Austausch des gebundenen Alkohols notwendig ist, noch zusätzlich soviel an dem gleichen Glycolether dem Ansatz hinzugefügt, wie der gewünschten Konzentiation der Lösung entspricht. Auch dann wird sowohl der in dem Ausgangsprodukt vorhandene gebundene als auch der als Lösungsmittel enthaltene einfache Alkohol möglichst quantitativ abdestilliert.

Die Lösungsmittelmenge für die Glycoletherlösungen der neuen Titanchelate kann in weiten Grenzen variiert werden; zweckmäßigerweise wählt man die Menge so, daß der Titanchelatgehalt der Lösungen über 50 Gew.-% liegt und die Viskosität der erhaltenen Lösungen nicht zu hoch wird. Der bevorzugte Bereich der Lösungen liegt im allgemeinen zwischen 50 und 75 Gew.-%.

Die Glycolether, die sowohl in Form ihres Alkoxyrestes in den neuen Titanchelaten vorliegen als auch als Lösungsmittel für die neuen Chelate eingesetzt werden können, entsprechend der allgemeinen Formel HO [CH$_2$-CH$_2$-O]$_n$-R, in der R für einen Alkylrest mit 1 - 4 C-Atomen steht und n Werte zwischen 1 und 8, vorzugsweise zwischen 1 und 4 annehmen kann. Beispiele für solche Glycolether sind die

2

Glycolmonomethylether, Glycolmonoethylether, Glycolmonobutylether, Diglycolmonomethylether, Diglycolmonoethyl ether, Diglycolmonobutylether. Auch Glycolethergemische können eingestezt werden, so daß auch verschiedene Glycoletherreste in den neuen Chelaten enthalten sein können.

Die Umsetzung der Titan(IV)-dialkoxy-bis-acetylacetonate mit den Glycolethern kann auch mit den entsprechenden Alkylglycolcarboxylaten durchgeführt werden, die auch als Glycolester bezeichnet werden. Als Beispiele seien Glycolmonomethylether-acetat und Diglycolmonobutyletheracetat genannt. Diese Verbindungen reagieren unter Esteraustausch mit dem Titanacetylacetonat. Sie können ebenso wie die oben genannten Glycolether auch als Lösungsmittel eingesetzt werden.

Das Titanacetylscetonat, das bevorzugt zur Herstellung der neuen Verbindungen und derer Lösungen eingesetzt wird, ist das Diisopropoxy-bis(acetylacetonato)-titan, das auch als Diisopropoxy-bis-(2,4-pentandionato)-titan (IV) bezeichnet wird. Jedoch lassen sich auch andere Titanacetylacetonate, bei denen die Diisoproxygruppe z.B. durch die n-Butoxy-, n-Propoxy-, iso-Butoxy- oder die Ethoxi-Gruppe ersetzt ist, und die in den den Alkoxygruppen entsprechen den Alkoholen gelöst vorliegen, als Ausgangsprodukte einsetzten.

Die Anwendung der erfindungsgemäßen Titanchelate kann überall dort liegen, wo hydrolysestabile organische Titanate als Reaktionspartner benötigt werden. Insbesondere werden sie mit Vorteil dort eingesetzt werden, wo in wäßriger Lösung geringe Konzentrationen an Titanat als Beschichtungsmaterial, Vernetzer oder Katalysator zur Verfügung stehen sollen, d.h. beispielsweise zur Oberflächenbehandlung von Substraten, zur Verbesserung der Eigenschaften von wäßrigen Lacken auf Basis von Polyestern oder zur Vernetzung von Cellulose- und Stärkederivaten in wäßriger Lösung.

**Beispiel 1**

> >erstellung von Bis-2-(2-methoxi-ethoxi)-ethoxi-titan-bis acetylacetonat.

In den 1 l-Kolben eines Labor-Vakuumrotationsverdampfers werden 242 g handelsübliches Titanacetylacetonat (0,5 Mol als 75 %ige Lösung in Isopropanol) eingewogen und mit 120 g Methyldiglycol (1 Mol, 2-(2-Methoxi-ethoxi)ethanol) versetzt. Anschließend wird, beginnend bei einer Wasserbadtemperatur von 35°C, die im Laufe von 6 Stunden bis auf 80°C gesteigert wird, und bei einem verminderten Druck von 25 mbar, sowohl das im Ausgangsmaterial vorhandene wie auch das durch die Austauschreaktion des Titanacetylacetonats mit dem Methyldiglycol entstandene Isopropanol abdestilliert. Ausbeute 119,7 g Isopropanol (99,5 % der Theorie = 120 g, 2 Mol). Das so erhaltene Produkt ist ein dunkelrote, leicht bewegliche Flüssigkeit mit folgenden Kennzahlen:

Brechungsindex $n^{20}_D$ = 1,5440
Viskosität (20°C) = 57,5 mPa.s
Titandioxid-Gehalt = 16,4 %

Löslichkeit: Löslich in Isopropanol, Methylethylketon, Toluol oder Methylenchlorid. Beispielsweise sind 10 %ige Lösungen in diesen Lösungsmitteln mindestens über drei Monate stabil.

**Beispiel 2**

> >erstellung von Isopropoxi-2-(2-methoxi-ethoxi)ethoxi-titan-bis-acetylacetonat

In den 1 l-Kolben eines Labor-Vakuumrotationsverdampfers werden 242 g handelsübliches Titanacetylacetonat (0,5 Mol als 75 %ige Lösung in Isopropanol) eingewogen und mit 60 g Methyldiglycol (0,5 Mol, 2-(2-Methoxi-ethoxi)ethanol) versetzt. Anschließend wird, wie im Beispiel 1 beschrieben, Isopropanol unter vermindertem Druck (ca. 25 mbar) abdestilliert. Erhalten werden 89,6 g Isopropanol. (99,6 % der Theorie = 90 g, 1,5 Mol). Das so erhaltene Produkt ist eine dunktelrote, leicht bewegliche Flüssigkeit mit folgenden Kennzahlen:

Brechungsindex $n^{20}_D$ = 1,5570
Viskosität (20°C) = 129 mPa. s
Titandioxid-Gehalt = 18,3 %

Löslichkeit: Löslich in Isopropanol, Methylethylketon, Toluol oder Methylenchlorid. Beispielsweise sind 10 %ige Lösungen in diesen Lösungsmitteln mindestens über drei Monate stabil.

**Beispiel 3**

> >erstellung einer 65 %igen Lösung des Titanchelats nach Beispiel 1 in Methyldiglycol

In den 1 l-Kolben eines Labor-Vakuumrotationsverdampfers werden 242 g handelsübliches Titanacetylacetonat (0,5 Mol als 75 %ige Lösung in Isopropanol) eingewogen und mit 250 g Methyldiglycol (120 g = 1 Mol zum Austausch der Isopropoxy-Gruppen, 130 g als Lösungsmittel) versetzt. Anschließend wird, wie in Beispiel 1 beschrieben, Isopropanol unter vermindertem Druck (ca. 25 mbar) abdestilliert. Erhalten werden 119,5 g Isopropanol (99,5 % der Theorie = 120 g, 2 Mol). Das Produkt ist eine dunkelbraunrote Flüssigkeit, die sich mit Wasser in allen Verhältnissen mischen läßt.

**Beispiel 4 (Vergleichsbeispiel)**

> > erstellung einer 75 %igen Lösung von Diisopropoxy-titanbis-acetylacetonat in Methyldiglycol.

In den 1 l-Kolben eines Labor-Vakuumrotationsverdampfer werden 242 g handelsübliches Titanacetylacetonat (0,5 Mol als 75 %ige Lösung in Isopropanol) eingewogen und mit 60 g Methyldiglycol versetzt. Diese Menge Methyldiglycol entspricht der in 242 g Titanacetylacetonat enthaltenen Isopropanolmenge. Bei einem verminderten Druck von 25 mbar und einer Wasserbadtemperatur von 25°C wird während 6 Stunden Isopropanol über die Wasserstrahlpumpe abgezogen. Die Rückwägung des Kolbeninhalts ergibt einen Gewichtsverlust von 59,5 g, d.h. 99,2 % des im Titanacetylacetonat enthaltenen freien Isopropanols sind entfernt und durch Methyldiglycol ersetzt.

**Beispiel 5**

Prüfung der Löslichkeit der Produkte von Beispiel 1 bis 4 in Wasser im Konzentrationsbereich 1 - 2,5 %.

| Produkt von... | Löslichkeit in entsalztem Wasser bei einer Titanchelat-Konzentration von | |
|---|---|---|
| | 1 % | 2,5 % |
| Beispiel 1 | klare Lösung | klare Lösung |
| Beispiel 2 | klare Lösung | klare Lösung |
| Beispiel 3 | klare Lösung | klare Lösung |
| Beispiel 2, verdünnt mit Methyldiglykol auf 50 % | klare Lösung | klare Lösung |
| Handelsübliches Titanacetylacetonat = 75 %ig in Isopropanol | sofort Bodensatzbildung | sofort Bodensatzbildung |
| Titanacetylacetonat, verdünnt mit Isopropanol auf 50 % | schwach trübe Lösung | sofort Bodensatzbildung |
| Titanacetylacetonat, verdünnt mit Methyldiglykol auf 50 % | schwach trübe Lösung | sofort Bodensatzbildung |
| Beispiel 4 | schwach trübe Lösung | sofort Bodensatzbildung |

**Beispiel 6**

Anwendung 1 bzw. 2,5 %iger wäßriger Lösungen der Produkte nach Beispiel 1 und 2 zur Oberflächen-Modifikation von Metallen, Kunststoffen, Füllstoffen und Glasfasern.

a) Zur Oberflächenbehandlung von Aluminiumblech wird eine 2 %ige Lösung des Produktes nach Beispiel 1 hergestellt und ein Aluminiumblech (Abmessung:15 x 8 x 0,1 cm) darin 30 Sekunden getaucht. Nach Ablauf der überschüssigen Lösung und Abtrocknen des Bleches mittels Warmluft verbleibt auf dem Aluminium eine die Haftung zu nachfolgenden Lackierungen verbessernde Schicht, die derjenigen gleichwertig ist, die durch Tauchen eines gleichen Bleches in einer 2 %igen Lösung von handelsüblichem Titanacetylacetonat in Toluol mit nachfolgendem Trocknen erhalten wird.

b) Die Arbeitsweise nach a) läßt sich auch auf die haftungsverbessernde Oberflächenbehandlung von Kunststoffen, wie z.B. Polyethylen- oder Polyesterfolien, von Füllstoffen und von Glasfasern übertragen. Bei diesen Anwendungen mußte bisher entweder mit brennbaren oder physiologisch bedenklichen organischen Lösungsmitteln gearbeitet werden, oder das Titanacetyl acetonat mußte durch umständliche Verfahrensschritte in eine nur teilweise wäßrige Lösung überführt werden.

**Patentansprüche**

1. Wasserlösliche Titan (IV)-dialkoxybisacetylacetonate, dadurch gekennzeichnet, daß mindestens eine der Alkoxygruppen eine Alkyl-oxy-alkylenoxy- oder Alkyloxypolyalkylenoxygruppe ist.

2. Isopropoxy-2-(2-methoxy-ethoxi)ethoxititan-bis-acetyl-acetonat.

3. Bis-2-(2-methoxi-ethoxi)ethoxititan-bis-acetylacetonat.

4. Lösungen von Titan(IV)-dialkoxy-bis-acetylacetonaten gemäß einem der Ansprüche 1 bis 3 in Glycolethern oder Polyglycolethern mit Anteilen dieser Chelate zwischen 10 und 99 Gew.-%.

5. Lösungen von Titan(IV)-dialkoxy-bis-acetylacetonaten gemäß Anspruch 4, dadurch gekennzeichnet, daß sie als zusätzliches Lösungsmittel Wasser enthalten und der Anteil des Titanchelats in der Lösung zwischen 1 und 4 Gew.-% liegt.

6. Verwendung von Lösungen gemäß Anspruch 5 zur Beschichtung von Substraten oder als Vernetzungskatalysator.

## Claims

1. Water soluble titanium (IV)-dialkoxybisacetyl acetonates, characterised in that at least one of the alkoxy groups is an alkyloxyalkylenoxy- or alkyloxypolyalkylenoxy group.

2. Isopropoxy-2-(2-methoxyethoxy)ethoxytitanium-bis-acetyl acetonate.

3. Bis-2-(2-methoxy-ethoxy)ethoxytitanium-bis-acetyl acetonate.

4. Solutions of titanium (IV)-dialkoxy-bis-acetyl acetonates according to one of claims 1 to 3 in glycol ethers or polyglycol ethers with amounts of these chelates betweeen 10 and 99% by weight.

5. Solutions of titanium (IV)-dialkoxy-bis-acetyl acetonates according to claim 4, characterised in that they contain water as additional solvent and the amount of the titanium chelate in the solution lies between 1 and 4% by weight.

6. Use of solutions according to claim 5 for the coating of substrates or as cross-linking catalyst.

## Revendications

1. Biv-acétylacetonates de dialcoxy titane (IV) solubles dans l'eau, caractérisés en ce qu'au moins un des groupes alcoxy est un groupe alkyloxy-alkylèneoxy ou alkoxy polyalkylèneoxy.

2. Bis-acétylacétonate d'isopropoxy-(méthoxy-2 éthoxy) -2 éthoxy titane.

3. Bis-acétylacétonate de bis(méthoxy-2 éthoxy)-2 éthoxy titane.

4. Solutions de bis-acétylacetonates de dialcoxy titane (IV) selon une des revendications 1 à 3 dans des éthers glycoliques ou des éthers polyglycoliques avec des teneurs en ces chélates comprises entre 10 et 99% en poids.

5. Solutions de bis-acétylacétonates de dialcoxy titane (IV) selon la revendication 4, caractérisées en ce qu'elles contiennent de l'eau comme solvant additionnel et que la part de chélate de titane dans la solution se situe entre 1 et 4% en poids.

6. Utilisation des solutions selon la revendication 5 pour le revêtement de supports ou comme catalyseur de réticulation.